# EUROPÄISCHE PATENTANMELDUNG

(11) **EP 0 877 208 A2**
(43) Veröffentlichungstag der Anmeldung: **11.11.1998**
(21) Anmeldenummer: 98107113.7
(22) Anmeldetag: 18.04.1998
(51) Int. Cl.: F24D 5/08, F24H 3/04, F24H 6/00

(54) **Strahlungswärme-Raumheizsystem**

(30) Priorität: 07.05.1997 DE 19719137
(71) Anmelder: Schröck, Dietrich, 86356 Neussäs (DE)
(72) Erfinder: Schröck, Dietrich, 86356 Neussäs (DE)
(74) Vertreter: Gallo, Wolfgang, Dipl.-Ing. (FH)

(57) **Zusammenfassung**

Strahlungswärme-Raumheizsystem, bestehend aus mindestens einem Luftheizaggregat (10), mindestens einem sich daran anschließenden Heißluftkanal (20), der von der im Luftheizaggregat erzeugten Heißluft durchströmt wird und mindestens teilweise von keramischen Wärmeabstrahlkörpern begrenzt ist, die von der Heißluft beheizt werden und in den zu beheizenden Raum abstrahlende Heizflächen aufweisen, und aus einem am auslaßseitigen Ende des Heißluftkanals angeordneten Sauggebläse (30).

## Beschreibung

Die Erfindung betrifft ein überwiegend mit Strahlungswärme arbeitendes Raumheizsystem.

Bekannte Raumheizsysteme, nämlich mit Warmwasser oder Dampf als Wärmeträger durchströmte Heizkörper, Fußbodenheizungen oder Warmluftheizungen arbeiten überwiegend mit Konvektionswärme, also mit Wärmetransport innerhalb des beheizten Raums durch erwärmte Luft. Dies bedingt naturgemäß ein hohes Maß an konvektionsbedingter und bei Warmluftheizungen auch künstlicher Luftumwälzung mit entsprechendem Staubtransport durch die bewegte Luft und dadurch gesteigerter Verschmutzung der beheizten Räume, und erfordert zur Schaffung von Behaglichkeit auch eine gegenüber dem Einsatz von Strahlungswärme höhere Heizleistung, da die gesamte Raumluft erwärmt werden muß und außerdem, insbesondere bei höheren Räumen, eine Schichtung der Raumluft mit Konzentration der Wärme in der oberen Luftschicht auftreten kann, was die Wirtschaftlichkeit verschlechtert und schließlich treten, wiederum durch Konvektion, auch gegenüber dem Einsatz von Strahlungswärme höhere Wärmeverluste durch Abkühlung der erwärmten Luft an Fensterflächen auf.

Der Einsatz von Strahlungswärme bei Raumheizungen findet nur in sehr beschränktem Umfang statt, nämlich beispielsweise bei Heizstrahlern in Bädern, wo nur während relativ kurzer Zeitperioden, dann aber schnell verfügbar, ein erhöhter Heizbedarf besteht, oder bei echten Kachelöfen, bei denen die durch Beheizen erwärmten Kacheln Wärme abstrahlen (die meisten Kachelöfen sind heutzutage der schnellen Verfügbarkeit der Wärme wegen als Warmluftheizungen konzipiert, wobei die Kacheln nur eine dekorative Verkleidung bilden), aber solche echten Kachelöfen haben den Nachteil einer langen Anheizzeit und werden oft nur als Zusatzheizungen benutzt. Außerdem kann ein Kachelofen auch nur zur Beheizung eines Raumes oder allenfalls, bei entsprechender baulicher Anordnung, zur Beheizung zweier benachbarter Räume eingesetzt werden.

Der Erfindung liegt die Aufgabe zugrunde, ein zumindest hauptsächlich mit Strahlungswärme arbeitendes Raumheizsystem zu schaffen, das zur Beheizung ganzer Wohnungen oder größerer Räume einsetzbar ist und eine vollwertige Raumheizanlage bildet.

Die Erfindung löst diese Aufgabe mit dem im Patentanspruch 1 angegebenen und in den Unteransprüchen vorteilhaft weiter ausgebildeten Raumheizsystem.

Das erfindungsgemäße Heizsystem arbeitet also wie ein ausgedehnter Kachelofen, der sich über mehrere Wohnräume oder einen ausgedehnten Raum erstreckt und durch Heißluft erhitzte keramische Kacheln aufweist, die Wärme abstrahlen. Die Beheizung der Kacheln erfolgt mit in einem speziellen Luftheizaggregat hocherhitzter Luft, die durch einen ausgedehnten, gegebenenfalls verzweigten Heizkanal zur Beheizung der Kachelflächen geführt wird, wobei der diese ausgedehnte Luftführung ermöglichende Zug durch ein Sauggebläse am austrittseitigen Ende des Luftkanals erzeugt wird.

Die erfindungsgemäße Heizanlage ermöglicht auch eine bedarfsweise Steuerung der Heizleistung und vielfältige Anpassungsmöglichkeiten an die zu beheizenden Räume, und ermöglicht auch Zusatzfunktionen wie beispielsweise gesonderte Badbeheizung, Warmwasserbereitung usw.

Die Erfindung wird nashstehend in näheren Einzelheiten unter Bezugnahme auf die anliegenden Zeichnungen näher beschrieben. In den sehr schematisch gehaltenen Zeichnungen zeigt:
- Fig. 1: ein schema des erfindungsgemäßen Strahlungswärme-Raumheizsystems insgesamt,
- Fig. 2: den grundsätzlichen Aufbau des Luftheizaggregats in schematischer Schnittdarstellung, und
- Fig. 3: das Luftheizaggregat in schematischer Schnittdarstellung längs der Schnittlinie III-III in Fig. 2.

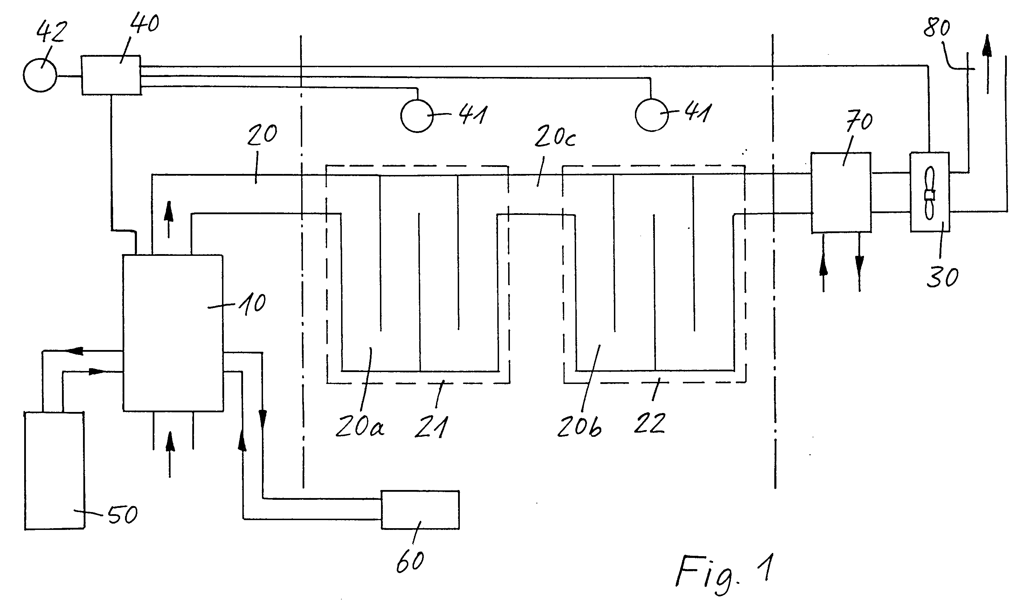

Fig. 1 zeigt nach Art eines Blockschaltbilds in sehr schematischer Darstellung den grundsätzlichen Aufbau des erfindungsgemäßen Raumheizsystems.

Das System umfaßt mindestens ein Luftheizaggregat 10, einen sich daran anschließenden, von der erzeugten Heißluft geheizte keramische Wärmeabstrahlkörper aufweisenden Heißluftkanal 20, und ein am auslaßseitigen Ende des Heißluftkanals angeordnetes Sauggebläse 30.

Zusätzlich weist das System vorzugsweise einen Regler 40, einen Warmwasserbereiter 50, einen Sekundärheizkreis 60, und eine Abgas-Wärmerückgewinnungseinheit 70 auf.

Das Raumheizsystem funktioniert grundsätzlich folgendermaßen:

Das Sauggebläse 30 erzeugt am austrittsseitigen Ende des Heißluftkanals 20 einen Unterdruck. Dadurch strömt Luft, die aus der Umgebung in einen Lufteintritt des Luftheizaggregats 10 eintritt, durch das Luftheizaggregat 10 und den Heißluftkanal 20 hindurch und tritt schließlich durch einen Abgasauslaß bzw. Schornstein 80 aus. Im Luftheizaggregat 10, das nachstehend in näheren Einzelheiten beschrieben wird, wird die eintretende Luft erhitzt und durchströmt dann den Heißluftkanal 20. Der Heißluftkanal 20 ist mindestens teilweise aus keramischen Wärmeabstrahlkörpern, also beispielsweise in Form von Kacheln wie bei einem Kachelofen, gebildet, die durch die Heißluft erhitzt werden und Wärme in den zu beheizenden Raum abstrahlen.

Das Luftheizaggregat 10 kann sich beispielsweise im Keller eines Hauses befinden oder in einem Nebenraum, z.B. in einer Garage oder auf dem Dachboden, und saugt Luft aus dem betreffenden Raum oder über einen entsprechenden Luftkanal auch Außenluft an.

Der Heißluftkanal 20 durchzieht in beliebiger geometrischer Form den zu beheizenden Raum oder die zu beheizenden Räume der Reihe nach oder auch in verzweigter Form.

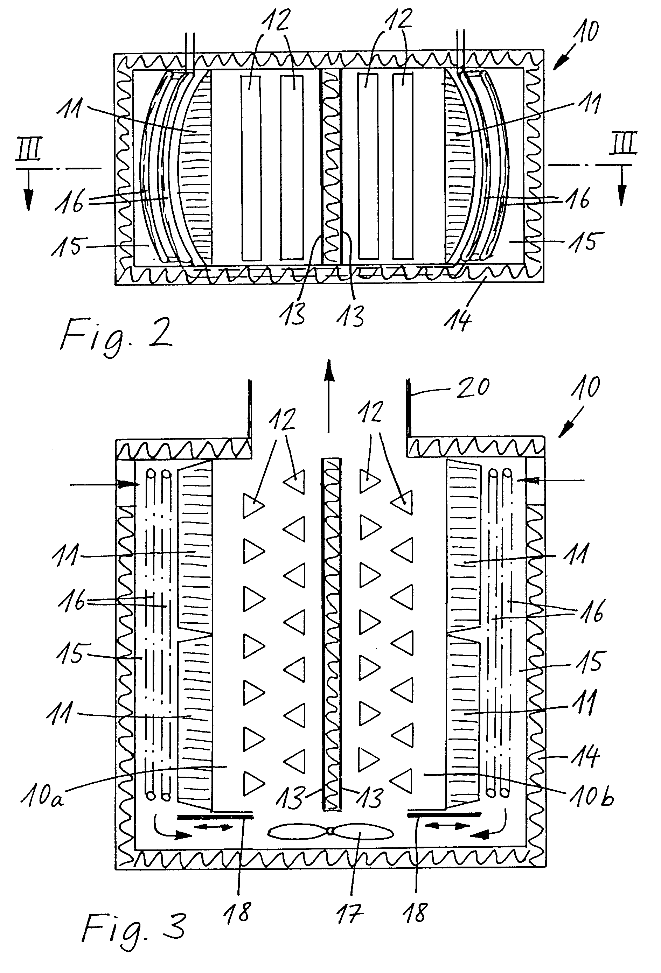

Der Aufbau des Luftheizaggregats 10 ist in den Figuren 2 und 3 dargestellt.

Das Luftheizaggregat 10 enthält mindestens einen Heizstrahler 11, der als sogenannter Hellstrahler ausgebildet ist. Bei dem Heizstrahler 11 handelt es sich vorzugsweise um einen an sich bekannten Gasheizstrahler mit Elektrozündung, jedoch kommen selbstverständlich auch andere Heizstrahlerbauarten in Betracht. Vorzugsweise enthält das Luftheizaggregat eine Mehrzahl solcher Heizstrahler 11, die einander gegenüberliegend, hintereinander, übereinander oder nebeneinander gesetzt sind. Die Figuren 2 und 3 zeigen gegenüberliegend angeordnete Heizstrahler 11, wobei in Fig. 3 beispielsweise vier solche Heizstrahler dargestellt sind. Diese mehreren Heizstrahler 11 können mittels des Reglers 40 je nach Heizbedarf in der jeweils benötigten Anzahl zu- oder abgeschaltet werden, und selbstverständlich ist auch eine Regelung des Heizbedarfs durch Veränderung der Heizleistung der Heizstrahler mittels des Reglers 40 möglich, beispielsweise bei Gasheizstrahlern durch Regulierung des Gasdurchsatzes.

Vor dem bzw. jedem Heizstrahler 11 ist eine Anzahl von Luftwärmetauscherkörpern 12 angeordnet, die durch die vom Heizstrahler 11 emittierte Wärmestrahlung erhitzt werden und durch Kontakt mit der darüber streichenden Luft diese erwarmen. Die Luftwärmetauscherkörper sind vorzugsweise bis mindestens 1000°C hitzebeständig, um einer entsprechenden, von den als Hellstrahler ausgebildeten Heizstrahlern 11 bewirkten Erhitzung Stand zu halten, und können beispielsweise aus Grauguß oder Keramik bestehen.

Die Luftwärmetauscherkörper 12 sind zweckmäßigerweise in gestaffelter Form vor dem jeweiligen Heizstrahler 11 im Strömungsweg der durch das Luftheizaggregat hindurchgesaugten Luft (durch Pfeil angedeutet) angeordnet und können jede beliebige Form haben, die zweckmäßig bzw. geeignet ist, einen möglichst intensiven Kontakt mit der umströmenden Luft und auch eine möglichst intensive Erfassung des gesamten Luftstroms sicherzustellen. Es können ggf. Leitbleche (nicht dargestellt) vorgesehen sein, oder die Luftwärmetauscherkörper 12 können selbst auch als Luftleitorgane gestaltet oder so im Strömungskanal angeordnet sein, daß sie in ihrer Gesamtheit für die das Luftheizaggregat durchströmende Luft einen labyrinthartigen Strömungsweg darstellen, ohne aber den Strömungswiderstand in einen der Funktion des Raumheizsystems insgesamt abträglichen Bereich zu steigern.

Gegenüber dem bzw. jedem Heizstrahler 11 ist im Luftheizaggregat ein Reflektor 13 eingebaut, der auftreffende Wärmestrahlung, die vom Heizstrahler 11 zwischen den gestaffelten Luftwärmetauscherkörpern hindurch oder von den Lufttauscherkörpern kommt, auf die Luftwärmetauscherkörper zurückreflektiert und dadurch zu einer optimalen Ausnutzung der von den Heizstrahlern 11 emittierten Wärmestrahlung führt. Bei paarweiser Gegenüberanordnung von Heizstrahlern 11, wie beim Ausführungsbeispiel in den Figuren 2 und 3 dargestellt, kann ein doppelseitiger Reflektor 13 mittig zwischen den beiden Heizstrahlern 11 angeordnet sein, oder vorzugsweise können zwei durch eine Wärmedämmschicht voneinander getrennte Reflektoren 13 Anwendung finden, damit, wenn einer der gegenüberliegenden Wärmestrahler abgeschaltet ist, keine Wärmeverluste entstehen.

Der Reflektor 13, der vorzugsweise eine verspiegelte Oberfläche hat, sofern er nicht ohnehin aus einem hochgradig reflektierenden Metall besteht, kann eine gewellte Form haben, um auftreffende Strahlung diffus zu reflektieren.

Zwischen der Rückseite des bzw. jedes Wärmestrahlers 11 und dem umgebenden Gehäuse 14 des Luftheizaggregats ist vorzugsweise eine Kammer 15 Gebildet. Diese kann auf mehrfache Weise zur Ausnutzung der rückseitig vom Heizstrahler 11 abgestrahlten Wärme genutzt werden, damit diese nicht als Verlustwärme verloren geht. Die Kammer 15 kann beispielsweise als Lufteinlaßkanal zum Luftheizaggregat zur Vorwärmung der Luft vor dem Eintritt in den die Luftwärmetauscherkörper enthaltenden inneren Bereich des Luftheizaggregats benutzt werden. Es ist auch möglich, durch die Kammer 15 hindurch beförderte Luft in einen besonderen Heizluftkanal (nicht dargestellt) einzuleiten, z.B. um Nebenräume zu beheizen, was direkt als Warmluftheizung geschehen kann oder wiederum durch Beheizung von Wärmeabstrahlkörpern (Kacheln). Auch Bäder können beispielsweise in dieser Weise beheizt werden.

Des weiteren ist in der Kammer 15 vorzugsweise mindestens eine Wärmetauscherrohrschlange 16 untergebracht, die in einen Wasserkreislauf zur Warmwasserbereitung oder in einen Warmwasserheizkreislauf geschaltet ist, beispielsweise zur Beheizung von Bädern durch normale Warmwasserheizkörper oder auch durch sogenannte Handtuchheizkörper, d.h. durch Handtuchhalter, die durch heizwasserdurchströmte Rohrkörper gebildet sind. Die entsprechenden Innenwandflächen des Gehäuses 14 können wiederum verspiegelt bzw. reflektierend ausgebildet sein, um die höchstmögliche Ausnutzung der auftretenden Wärmeabstrahlung zu ermöglichen.

Alle die eben beschriebenen Möglichkeiten können einzeln oder in Kombination miteinander eingesetzt werden. Es kann auch ein zusätzliches Gebläse 17 im Einlaßbereich des Luftheizaggregats (zusätzlich zu dem Sauggebläse 30 am auslaßseitigen Ende des Heißluftkanals 20) vorgesehen sein, um einen Förderdruck zur effektiven Umströmung der in Luftheizaggregat vorhandenden Luftwärmetauscherkörper bei Luftansaugung durch die Kammern 15 zu bewirken.

Über den Regler 40 kann die Heizleistung des Luftheizaggregats 10, wie schon gesagt, gesteuert bzw. geregelt werden. Dem Regler 40 kann in üblicherweise ein Innentemperaturfühler 41 und/oder ein Außentemperaturfühler 42 zugeordnet sein.

Als Innentemperaturfühler 41 kann eine schwarze Kugel verwendet werden, die Strahlung und Raumtemperatur erfaßt. Der Regler 40 kann einen Mikroprozessor enthalten, der die erforderliche Heizleistung bestimmt und die notwendigen Einstellungen vornimmt. Der Mikroprozessor kann bei der Berechnung der Heizleistung nicht nur Parameter wie beispielsweise Strahlungsleistung im beheizten Raum, Innentemperatur, Außentemperatur, Lufteinlaßtemperatur, Luftauslaßtemperatur, Luftdurchsatz bzw. Drehzahl des Gebläses und Gasdurchsatz zu den Heizstrahlern berücksichtigen, sondern auch, in Abhängigkeit von bisheriger Heizleistung und Heizdauer, die im Keramiksystem des Heißluftkanals 20 bereits gespeicherte Wärmemenge berechnen und auswerten.

Bei gegenüberliegender Anordnung von Heizstrahlern 11 im Luftheizaggregat 10, wie in den Figuren 2 und 3 dargestellt ist, können die beiden Luftkanalzweige 10a, 10b, die den Heizstrahlern 11 auf der einen Seite bzw. den Heizstrahlern 11 auf der anderen Seite zugeordnet sind, beide oder nur einer davon mit einem Schieber 18 versehen sein, der ebenfalls über den Regler 40 derart steuerbar ist, daß, wenn das Luftheizaggregat nur mit halber Leistung arbeitet, also nur die Heizstrahler 11 auf der einen Seite eingeschaltet sind, der den Heizstrahlern auf der anderen Seite zugeordnete Luftzweigkanal durch den Schieber 18 abgesperrt werden kann.

Des weiteren kann der Regler 40 auch auf das Sauggebläse 30 einwirken, um dessen Drehzahl und somit den erzeugten Saugdruck und hierdurch den Luftdurchsatz durch den Heißluftkanal 20 entsprechend der geforderten Heizleistung stufig oder stufenlos zu steuern. Arbeitet also das Luftheizaggregat 10 nur mit halber Leistung, kann also das Gebläse 30 in eine Stellung entsprechend nur dem halben Luftdurchsatz durch den Heißluftkanal 20 geschaltet werden.

Der Heißluftkanal 20 kann je nach Bedarf in seinem Verlauf beliebig geführt werden. Zur Herstellung von Heizflächen kann er mäanderförmig geführt werden, und, beispielsweise zur Beheizung mehrerer Räume, können mehrere Heizflächen 21, 22 strömungstechnisch hintereinander geschaltet sein, der Heißluftkanal 20 also mehrere mäanderförmige Abschnitte 20a, 20b im Bereich der jeweiligen Heizflächen aufweisen, die durch gestreckte Abschnitte 20c miteinander verbunden sind. Zumindest im Bereich der Heizflächen kann der Heißluftkanal 20 aus Keramikkörpern gebildet sein, die raumseitig als Kacheln zur Wärmeabstrahlung in den Raum ausgebildet sind. Es ist aber selbstverständlich auch möglich, den Heißluftkanal 20 nur an seinem raumseitigen Bereich durch Kachelkörper zu begrenzen, die als Wärmeabstrahlkörper dienen und von der Heißluft beheizt werden, und den Heißluftkanal 20 an seinen übrigen Seiten durch eine andere geeignete Wandkonstruktion mit Wärmedämmung zu begrenzen, welche die notwendige Hitzebeständigkeit aufweist. Die jeweilige konkrete Ausführung wird man im Hinblick auf eine möglichst optimale Konzentration der Wärme auf die Wärmeabstrahlkörper und auf eine möglichst optimale Vermeidung von Verlustwärme wählen.

Der am Ende des Heißluftkanals 20 vor oder nach dem Sauggebläse 30 angeordnete Wärmetauscher 70 kann in an sich bekannter Weise zur Erwärmung von Brauchwasser oder dgl. ausgebildet sein.

Die Anordnung des Sauggebläses 30 am auslaßseitigen, also kühlen Ende des Heißluftkanals 20 erfordert nur eine mäßige Hitzebeständigkeit des Gebläses. Die Anordnung als Sauggebläse, ggf. unterstützt durch ein am Einlaß des Luftheizaggregats 10 angeordnetes Druckgebläse, ermöglicht eine sehr große Länge des Heißluftkanals 20 und somit eine ausgedehnte Anlage des Heizsystems.

Der in Fig. 1 dargestellte Warmwasserbereiter 50 und der als Badheizung nutzbare Sekundärheizkreis 60 können über Wärmetauscherschlangen 16 im Luftheizaggregat 10 gespeist werden.

## Patentansprüche

1. Strahlungswärme-Raumheizsystem, bestehend aus mindestens einem Luftheizaggregat (10), mindestens einem sich daran anschließenden, gegebenenfalls verzweigten Heißluftkanal (20), der von der im Luftheizaggregat erzeugten Heißluft durchströmt wird und mindestens teilweise von keramischen Wärmeabstrahlkörpern begrenzt ist, die von der Heißluft beheizt werden und in den zu beheizenden Raum abstrahlende Heizflächen aufweisen, und aus einem am auslaßseitigen Ende des bzw. jedes Heißluftkanals oder Heißluftkanalzweigs angeordneten Sauggebläse (30).

2. Strahlungswärme-Raumheizsystem nach Anspruch 1, dadurch gekennzeichnet, daß der oder jeder Heißluftkanal (20) oder Heißluftkanalzweig einen oder mehrere in Reihe geschaltete mäanderförmig geführte Abschnitte zur Bildung größerer Heizflächen aufweist.

3. Strahlungswärme-Raumheizsystem nach Anspruch 1 oder 2, dadurch gekennzeichnet, daß das Luftheizaggregat (10) mindestens einen als Hellstrahler ausgebildeten Heizstrahler, beispielsweise einen Gasheizstrahler mit Elektrozündung, sowie eine Anzahl von Luftwärmetauscherkörpern (12), beispielsweise aus Keramikmaterial oder Grauguß, enthält, die durch den Heizstrahler erhitzt werden und über welche die in den mindestens ein Heißluftkanal (20) eingesaugte Luft streicht.

4. Strahlungswärme-Raumheizsystem nach Anspruch 3, dadurch gekennzeichnet, daß gegenüber dem bzw. jedem Heizstrahler (11) ein Reflektor (13) angeordnet ist, wobei die Luftwärmetauscherkörper (12) zwischen dem Heizstrahler und dem Reflektor angeordnet sind.

5. Strahlungswärme-Raumheizsystem nach Anspruch 3, dadurch gekennzeichnet, daß das Luftheizaggregat (10) mindestens ein Paar von einander gegenüberliegend und einander zugewandt angeordneten Wärmestrahlern (10) mit dazwischen angeordneten Luftwärmetauscherkörpern (12) und gegebenenfalls einem dazwischen angeordneten doppelseitigen Reflektor (13) oder zwei durch eine Wärmedämmschicht voneinander getrennten Reflektoren (13) aufweist.

6. Strahlungswärme-Raumheizsystem nach Anspruch 4 oder 5, dadurch gekennzeichnet, daß der bzw. jeder Reflektor (13) eine gewellte Form hat, um auftreffende Strahlung diffus zu reflektieren.

7. Strahlungswärme-Raumheizsystem nach einem der Ansprüche 3 bis 6, dadurch gekennzeichnet, daß die Luftwärmetauscherkörper in gestaffelter Form vor dem jeweiligen Heizstrahler (11) im Strömungsweg der durch das Luftheizaggregat hindurchgesaugten Luft angeordnet und/oder als Luftleitorgan gestaltet sind, um einen labyrinthartigen Strömungsweg für die das Luftheizaggregat durchströmende Luft darzustellen.

8. Strahlungswärme-Raumheizsystem nach einem der Ansprüche 3 bis 7, dadurch gekennzeichnet, daß zwischen der Rückseite des oder jedes Heizstrahlers (11) und dem umgebenden Gehäuse (14) des Luftheizaggregats eine Kammer (15) zur Beheizung eines Mediums mit Verlustwärme des Heizstrahlers gebildet ist, wobei die rückwärtige Kammer (15) als Lufteinlaßkanal zum Luftheizaggregat zur Luftvorwärmung oder als luftdurchströmte Heizkammer zur Speisung eines gesonderten Heizluftkanals oder zur Aufnahme einer Wärmetauscherrohrschlange (16) zur Wasserbereitung oder zur Speisung eines Warmwasser-Heizkreislaufs dienen kann.

9. Strahlungswärme-Raumheizsystem nach einem der Ansprüche 1 bis 8, dadurch gekennzeichnet, daß am auslaßseitigen Ende des oder mindestens eines Heißluftkanals (20) bzw. Heißluftkanalzweigs vor oder nach dem Sauggebläse (30) ein Wärmetauscher (70) zur Erwärmung von Brauchwasser oder dgl. angeordnet ist.

10. Strahlungswärme-Raumheizsystem nach einem der Ansprüche 1 bis 9, dadurch gekennzeichnet, daß am Einlaß des Luftheizaggregats (10) zusätzlich ein Druckgebläse angeordnet ist.

11. Strahlungswärme-Raumheizsystem nach einem der Ansprüche 1 bis 10, dadurch gekennzeichnet, daß ein Regler (40) vorgesehen ist, der in Abhängigkeit von den Heizbedarf bestimmenden Parametern den Luftdurchsatz des Heißluftkanals (20) durch Steuerung der Drehzahl des Sauggebläses (30) und gegebenenfalls des bzw. eines am Einlaß des Luftheizaggregats angeordneten Druckgebläses regelt.

12. Strahlungswärme-Raumheizsystem nach einem der Ansprüche 3 bis 11, mit einer Mehrzahl von Heizstrahlern (11) im Luftheizaggregat (10), dadurch gekennzeichnet, daß ein Regler (40) vorgesehen ist, der in Abhängigkeit von den Heizleistungsbedarf bestimmenden Parametern die Heizleistung durch Zuschalten bzw. Abschalten von mehr oder weniger Heizstrahlern (11) regelt.

13. Strahlungswärme-Raumheizsystem nach einem der Ansprüche 5 bis 12, dadurch gekennzeichnet, daß mindestens einer der beiden Luftkanalzweige (10a, 10b) im Luftheizaggregat (10), die jeweils einem der beiden Heizstrahler (11) des mindestens einen Heizstrahlerpaars zugeordnet sind, mit einem reglergesteuerten Schieber (18) absperrbar ist.

14. Strahlungswärme-Raumheizsystem nach einem der Ansprüche 11 bis 14, dadurch gekennzeichnet, daß dem Regler (40) ein Innentemperaturfühler (41) in Form einer schwarzen Kugel, die sowohl Strahlung als auch Raumtemperatur erfaßt sowie gegebenenfalls ein Außentemerpaturfühler und weitere Fühler zur Messung von Parametern wie beispielsweise Lufteinlaßtemperatur und Luftauslaßtemperatur am Luftheizaggregat und am Heißluftkanal, Luftdurchsatz, Gebläsedrehzahl und Gasdurchsatz zugeordnet sind.

15. Strahlungswärme-Raumheizsystem nach einem der Ansprüche 11 bis 14, dadurch gekennzeichnet, daß der Regler (40) einen Mikroprozessor enthält, der außer Parametern wie beispielsweise Strahlungsleistung im beheizten Raum, Innentemperatur, Außentemperatur, Lufteinlaßtemperatur, Luftauslaßtemperatur, Luftdurchsatz, Gebläsedrehzahl und Gasdurchsatz zu den Heizstrahlern auch die jeweils bisherige Heizleistung und Heizdauer berücksichtigt, um die im Keramiksystem des Heizluftkanals (20) bereits gespeicherte Wärmemenge zu berechnen und auszuwerten.
